# EUROPEAN PATENT APPLICATION

(11) **EP 1 151 775 A2**
(43) Date of publication of application: **07.11.2001**
(21) Application number: 01303790.8
(22) Date of filing: 26.04.2001
(51) Int. Cl.: A63F 13/10

(54) **Recording medium, program, entertainment system, and entertainment apparatus**

(30) Priority: 27.04.2000 JP 2000128490; 03.04.2001 JP 2001104797
(71) Applicant: Sony Computer Entertainment Inc., Tokyo 107-0052 (JP)
(72) Inventor: Masuda, Yasutaka, Yachmata-shi, Chiba-ken 289-1144 (JP); Takahashi, Hiromichi, c/o Sony Computer Ent. Inc., Tokyo 107-0052 (JP)
(74) Representative: Turner, James Arthur

(57) **Abstract**

In an adventure game, characters face up to difficulty in a game scenario recorded as a program. The progress of the game is achieved by overcoming the difficulty according to the game scenario. In such a game, a movie scene mode (MS) for automatically performing the game program by a CPU, and a play scene mode (PS) for advancing the game scenario based on commands inputted by a player with a manual controller are repeated alternately. In the play scene mode, the player can arbitrarily select a character and control the selected character as a main character for solving riddles or problems. In the movie scene mode (MS), the player can enjoy viewing an animation like a cinema film. Since the user can interactively play the game in the play scene mode (PS), a highly entertaining video game can be provided.

## Description

The present invention relates to a recording medium for storing a program, the program itself, an entertainment system for executing the program, and an entertainment apparatus for executing the program for a game directed to solve problems in a game scenario by obtaining items and information.

Adventure games directed to solve riddles or problems in a game scenario by obtaining items and information are regarded to be highly entertaining.

In the conventional games, characters face up to difficulty in a game scenario recorded as a program. The progress of the game is achieved by overcoming the difficulty according to the game scenario.

Various respective aspects and features of the invention are defined in the appended claims.

Embodiments of the present invention have been made for the game as described above, and can provide a recording medium for storing a program, the program itself, an entertainment system for executing the program, and an entertainment apparatus for executing the program, for making it possible to create a highly entertaining game.

Embodiments of the present invention can provide a recording medium for storing a program, the program itself, an entertainment system for executing the program, an entertainment apparatus for executing the program, for making it possible for a player to solve problems by changing a character.

According to the present invention, a recording medium stores a program comprising the steps of:
detecting a command for selecting a desirable character from a plurality of characters; and
generating a camera coordinate system such that the desirable character selected by the command is positioned in a screen coordinate system.

Further, according to the present invention, a recording medium stores a program executed by a computer for performing a process in a movie scene mode and a process in a play scene mode alternately,
external commands for controlling a character being disabled in the movie scene mode and enabled in the play scene mode so that the character control can be performed automatically by executing the program in the movie scene mode and the character control can be performed based on the external commands in the play scene mode,
wherein the process in the play scene mode comprises the steps of:
   detecting a command for selecting a desirable character from a plurality of characters; and
   generating a camera coordinate system such that the desirable character selected by the command is positioned in a screen coordinate system.

According to the present invention, a program comprises the steps of:
detecting a command for selecting a desirable character from a plurality of characters; and
generating a camera coordinate system such that the desirable character selected by the command is positioned in a screen coordinate system.

Further, according to the present invention, a program is executed by a computer for performing a process in a movie scene mode and a process in a play scene mode alternately,
external commands for controlling a character being disabled in the movie scene mode and enabled in the play scene mode so that the character control can be performed automatically by executing the program in the movie scene mode and the character control can be performed based on the external commands in the play scene mode,
wherein the process in the play scene mode comprises the steps of:
   detecting a command for selecting a desirable character from a plurality of characters; and
   generating a camera coordinate system such that the desirable character selected by the command is positioned in a screen coordinate system.

According to the present invention, an entertainment system comprises:
an entertainment apparatus comprising a memory for storing a program and a processing unit for executing the program;
a manual controller for inputting a control request of a player to the entertainment apparatus; and
a monitor for displaying an image outputted from the entertainment apparatus,
wherein the program comprises the steps of:
   detecting a command for selecting a desirable character from a plurality of characters; and
   generating a camera coordinate system such that the desirable character selected by the command is displayed on the monitor.

According to the present invention, an entertainment apparatus is connectable to a manual controller for inputting a control request of a player to the entertainment apparatus and connectable to a monitor for displaying an image outputted from the entertainment apparatus,
wherein the entertainment apparatus comprises a memory for storing a program and a processing unit for executing the program, the program comprising the steps of:
detecting a command for selecting a desirable character from a plurality of characters; and
generating a camera coordinate system such that the desirable character selected by the command is displayed on the monitor.

According to the present invention, since a camera coordinate system is generated such that the desirable character selected by the command is positioned in a screen coordinate system. Accordingly, it is possible to create a highly entertaining game.

The camera coordinate system can be generated based on a position of the desirable character selected by the command in a world coordinate system, if it is determined that the desirable character is not positioned in a current screen coordinate system. Accordingly, it is possible to always display the desirable character on a screen of the monitor.

The selectable characters may be displayed on a screen so that a player can easily input the command for selecting a desirable character.

In this case, the currently selected character can be displayed as a still image at a certain position on the screen.

Each of the characters may have at least one distinctive attribute. Accordingly, it is possible to control the respective characters to perform suitable actions according to their attributes.

The attributes may be a character's item or a character 's skill. The character may obtain an item during the game. Alternatively, the character may have an item from the beginning of the game.

The game mode may be switched from the play scene mode to the movie scene mode, if a command indicating a correct action of the selected character predetermined by the program is inputted. Accordingly, the player can get a feeling of accomplishment by completing the task of solving a problem.

Further, according to the present invention, the player can enjoy viewing an animation like a cinema film in the movie scene mode and the player can interactive play the game in the play scene mode. Accordingly, highly entertaining game can be provided.

The invention will now be described by way of example with reference to the accompanying drawings, throughout which like parts are referred to by like references, and in which:
FIG. 1 is a view showing an arrangement of an entertainment system according to an embodiment of the present invention;
FIG. 2 is a cross sectional view showing an operation of a pressure-sensitive element;
FIG. 3 is a block diagram showing a circuit arrangement of a manual controller;
FIG. 4 is a block diagram of the entertainment system;
FIG. 5 is a view showing a relationship between a world coordinate system and a camera coordinate system;
FIG. 6 is a view showing a relationship between the camera coordinate system and a screen coordinate system;
FIG. 7 is a flow chart showing in principle a processing sequence of a main part of a game program according to the present invention;
FIG. 8 is a table showing characters and their occupations and skills;
FIG. 9 is a table showing control buttons and their functions;
FIG. 10 is a table showing marks and their meanings;
FIG. 11 is a plan view schematically showing a world coordinate system according to the present invention;
FIG. 12 is a view showing a screen of a movie scene mode at the time of starting a game scenario;
FIG. 13 is a view showing a screen of the movie scene mode;
FIG. 14 is a view showing a screen of a play scene mode in which character selection icons are displayed;
FIG. 15 is a view showing a screen of the play scene mode;
FIG. 16 is a view showing a screen of the play scene mode;
FIG. 17 is a view showing a screen of the play scene mode;
FIG. 18 is a view showing a screen of the movie scene mode;
FIG. 19 is a view showing a screen of the movie scene mode;
FIG. 20 is a view showing a screen of the play scene mode in which an item window is displayed;
FIG. 21 is a view showing a screen of the play scene mode in which a window for deciding to use a selected item or to cancel to use the selected item is displayed;
FIG. 22 is a view showing a screen of the play scene mode;
FIG. 23 is a view showing a screen of the play scene mode;
FIG. 24 is a view showing a screen of the play scene mode;
FIG. 25 is a view showing a screen of the play scene mode;
FIG. 26 is a view showing a screen of the play scene mode;
FIG. 27 is a view showing a screen of the play scene mode;
FIG. 28 is a view showing a screen of the play scene mode in which an item window is displayed;
FIG. 29 is a view showing a screen of the play scene mode in which a window for deciding to use a selected item or to cancel to use the selected item is displayed;
FIG. 30 is a view showing a screen of the movie scene mode;
FIG. 31 is a view showing a screen of the movie scene mode;
FIG. 32 is a view showing a screen of the play scene mode;
FIG. 33 is a view showing a screen of the play scene mode;
FIG. 34 is a view showing a screen of the play scene mode; and
FIG. 35 is a view showing a screen of the movie scene mode at the time of ending the game scenario.

An embodiment of the present invention will be described with reference to drawings.

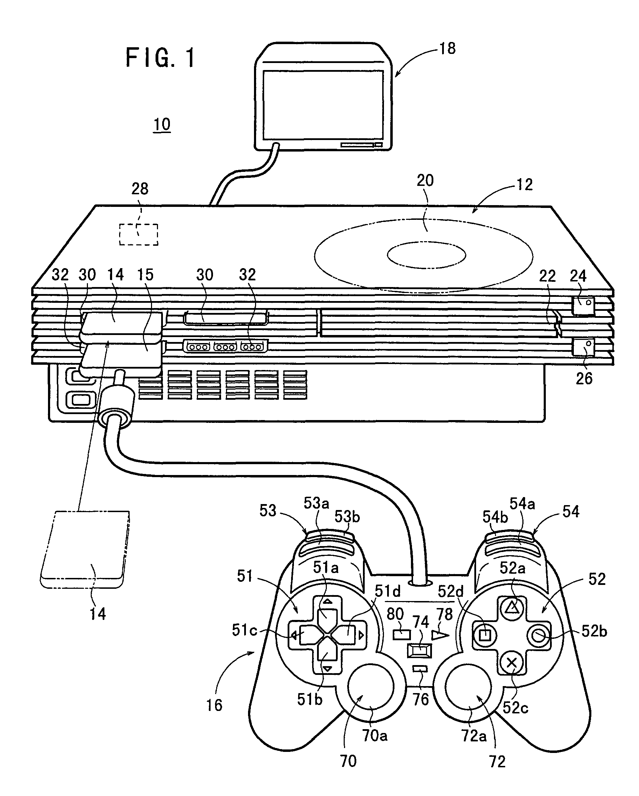

FIG. 1 schematically shows in perspective an entertainment system 10 according to the embodiment of the present invention.

As shown in FIG. 1, the entertainment system 10 basically comprises an entertainment apparatus 12 for executing various programs, a memory card 14 detachably connected to the entertainment apparatus 12 as an external storage device (external memory), a manual controller 16 detachably connected to the entertainment apparatus 12 via a connector 15 for inputting external data such as commands and decisions from a user to the entertainment apparatus 12, and a monitor 18 for displaying video images and outputting audio sounds based on video signals and audio signals outputted from the entertainment apparatus 12.

The entertainment apparatus 12 has a shape like stacked boxes (upper planar box and lower planar box). On the front side, the entertainment apparatus 12 is equipped with a disk tray 22 movable into and out of the casing as a disk loading unit for installing a recording medium such as an optical disk 20 for storing programs and data, a reset switch 24 for arbitrarily resetting a program which is currently executed, an eject button 26 for opening the disk tray 22 for placing or removing the optical disk 20, two slots 30 for inserting the memory card 14, and two connection terminals (controller ports) 32 for inserting the connector 15 of the manual controller 16. On the back side, the entertainment apparatus 12 is equipped with a power switch 28, and an unillustrated output terminal (AV MULTI OUT) connectable to an AV cable for outputting images and sounds to the monitor 18 via the AV cable.

The entertainment apparatus 12 has various functions including a control function to read and execute a computer game program (video game program) stored in a recording medium (the optical disk 20) such as a CD-ROM and a DVD-ROM for displaying images, i.e., characters and scenes of the video game on the monitor 18, a control function to play back movie data of DVDs and music data of CDDA (compact disk digital audio), and a control function to execute a program downloaded via a communication link such as a communication network. The entertainment apparatus 12 is capable of executing a game program for generating three-dimensional computer graphics images to be displayed on the monitor 18 as a display.

With the control functions, the entertainment apparatus 12 processes manipulation signals inputted from the manual controller 16 to reflect such manipulation signals for moving a character or changing a character or a scene on the screen of the monitor 18, for example.

The manual controller 16 has first and second control units 51, 52 disposed in left and right areas on the upper central surface of its casing, third and fourth control units 53, 54 disposed on a side of the casing (where a cord for connection to the entertainment apparatus 12 is connected), and left and right joysticks (analog sticks) 70, 72 disposed in left and right areas on the upper front surface of the casing for entering analog control actions.

Further, the manual controller 16 has unillustrated internal motors near the left and right joysticks for creating vibrations (shocks) to the manual controller 16 based on commands supplied by a program.

The first control unit 51 has four control buttons (also referred to as the "direction buttons"). The direction buttons include an up button 51a, a down button 51b, a left button 51c, and a right button 51d. By pressing the direction buttons 51a, 51b, 51c, 51d, the user (game player) inputs commands for moving a character upwardly, downwardly, leftwardly, and rightwardly displayed on the screen of the monitor 18. The functions (configuration) of the direction buttons are set by a program recorded in the optical disk 20.

The second control unit 52 has four circular control buttons 52a, 52b, 52c, 52d. The control buttons 52a, 52b, 52c, 52d, are marked respectively with symbols of triangle, circle, cross, and square on their upper surfaces and are thus referred to as a triangle button 52a, a circle button 52b, an X button 52c, and a square button 52d.

The functions of the control buttons 52a - 52d of the second control unit 52 are set by the program recorded in the optical disk 20. For example, functions to move the left arm, the right arm, the left leg, and the right leg of a character are allocated to the control buttons 52a - 52d, respectively.

The third and fourth control units 53, 54 are identical in structure to each other, and have two upper and lower pressable control buttons (L1, L2 buttons) 53a, 53b and two upper and lower pressable control buttons (R1, R2 buttons) 54a, 54b, respectively. Functions of the third and fourth control units 53, 54 are also set by the program recorded in the optical disk 20. For example, a function to perform a special action of a character and a function to change (select) a character are allocated.

The left and right joysticks 70, 72 are associated with respective signal input devices such as rheostats which can be rotated 360° about their shafts. The left and right joysticks 70, 72 can be returned to their neutral positions by resilient members (not shown). In the neutral positions, the left and right joysticks 70, 72 serve as fifth and sixth pressable control units comprising control buttons (L3, R3 buttons) 70a, 72a, respectively.

When the left and right joysticks 70, 72 are rotated (tilted), command signals are inputted to the entertainment apparatus 12 to cause a character to make an analog action, i.e., to move a character while rotating same, or move a character at a varying speed, or change a status of a character. According to the present embodiment, by manipulating the left joystick 70, it is possible to move a character in a direction indicated by a cursor (arrow) displayed on the monitor 18 as described later on.

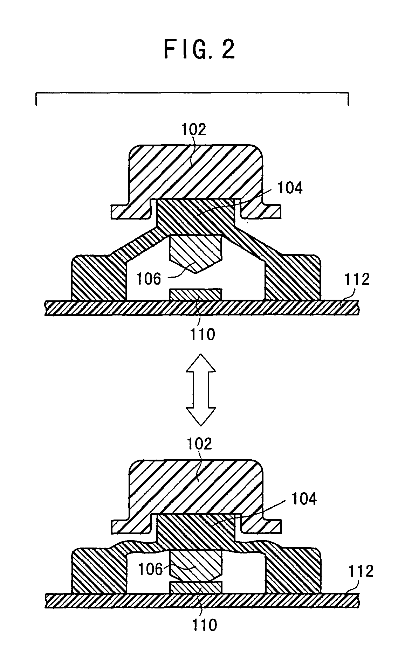

FIG. 2 shows in cross section an internal structure of a portion of the manual controller 16.

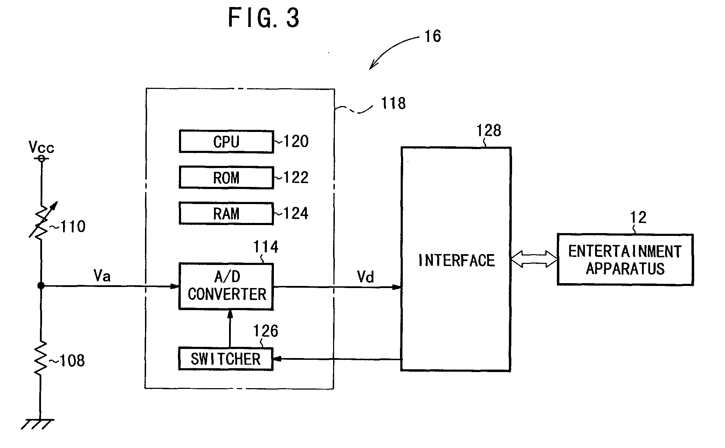

In FIG. 2, a control button 102 represents each of the direction buttons 51a - 51d of the first control unit 51, each of the control buttons 52a - 52d of the second control unit 52, each of the L1, L2 buttons 53a, 53b, the R1, R2 buttons 54a, 54b of the third and fourth control units 53, 54, and each of the control buttons 70a, 72a of the fifth and sixth control units. A resilient electrically conductive member 106 having a downwardly tapered shape is attached to the lower surface of the control button 102 by an insulating resilient pad 104. A resistor 110 is disposed downwardly of the resilient electrically conductive member 106 in vertical alignment therewith. The resistor 110 has an end connected to a voltage source having a voltage Vcc (see FIG. 3) and the other end connected to an end of a fixed resistor 108. The resistor 110 is disposed on an insulating board 112. The other end of the fixed resistor 108 is connected to ground.

When the direction buttons 51a - 51d, the control buttons 52a - 52d, the L1, L2 buttons 53a, 53b, the R1, R2 buttons 54a, 54b, and the control buttons 70a, 70b are pressed, i.e., when the control button 102 is pressed, the resilient electrically conductive member 106 is depressed into contact with the resistor 110. The resistance of the resistor 110 is changed depending on the area of contact between the resilient electrically conductive member 106 and the resistor 110. As a result, a divided voltage (analog value) Va determined by values of the resistors 110, 108 is changed and applied as an input signal to an A/D converter 114.

That is, the resilient electrically conductive member 106 and the resistor 110 jointly make up a pressure-sensitive element whose electric resistance varies depending on the pressure applied from the control button 102.

As described above, FIG. 2 shows the manner in which the control button 102 operates as a pressure-sensitive element for producing a signal output proportional to the pressure applied thereto. FIG. 3 shows in block form an electric circuit arrangement of major components of the manual controller 16.

As shown in FIG. 3, the manual controller 16 has an MPU (Microprocessor Unit) 118 as control means which comprises a CPU 120, a ROM 122, and a RAM 124. The ROM 122 and the RAM 124 are connected to the CPU 120.

The MPU 118 also has a switcher 126 and the A/D converter 114. The switcher 126 and the A/D converter 114 operate under the control of the CPU 120. An analog signal (voltage) Va outputted from the output terminal of the resistive layer 110 is supplied to the A/D converter 114, which converts the analog signal Va into a digital signal Vd.

The digital signal Vd outputted from the A/D converter 114 is applied to an interface 128 mounted on an internal board of the manual controller 16, and transmitted from the interface 128 to the entertainment apparatus 12. The digital signal Vd is supplied to the entertainment apparatus 12 for moving a game character, for example.

A change in the level of the analog signal Va outputted from the output terminal of the resistor 110 is commensurate with a change in the pressure applied to the control button 102 by the user. Therefore, the digital signal Vd outputted from the A/D converter 114 is commensurate with the pressure applied to the control button 102 by the user. When the motion of a game character, for example, is controlled by the digital signal Vd that is related to the pressure applied by the user, it is possible to achieve a smoother motion of the game character than the motion of the game character controlled by a binary digital signal having only two values of "1" or "0".

The manual controller 16 controls the switcher 126 via the interface 128 based on a control signal transmitted from the entertainment apparatus 12 according to the program recorded in the optical disk 20. Specifically, when the program recorded in the optical disk 20 is executed, the entertainment apparatus 12 outputs a control signal indicative of whether the A/D converter 114 functions as means for outputting a multivalued digital signal Vd having a value ranging from 0 to 255 or means for outputting a binary (ON/OFF) digital signal Vd having a value "0" or "1", according to the program. Based on the control signal, the CPU 120 controls the switcher 126 to select one of the functions of the A/D converter 114 to produce either a binary output or a multivalued output. Consequently, whether the A/D converter 114 is to produce either a binary output (two-valued output) or a multivalued output is determined by the program recorded in the optical disk 20.

In FIG. 1, either the left and right joysticks 70, 72 or the first and second control units 51, 52 are selected by an analog mode switch 74. When the left and right joysticks 70, 72 are selected by the analog mode switch 74, an indicator 76 is turned on, indicating the selection of the left and right joysticks 70, 72.

The manual controller 16 further has a start button (start switch) 78 for instructing the entertainment apparatus 12 to start a game, and a selection button (selection switch) 80 for selecting a level of difficulty of the game before the game is started, for example.

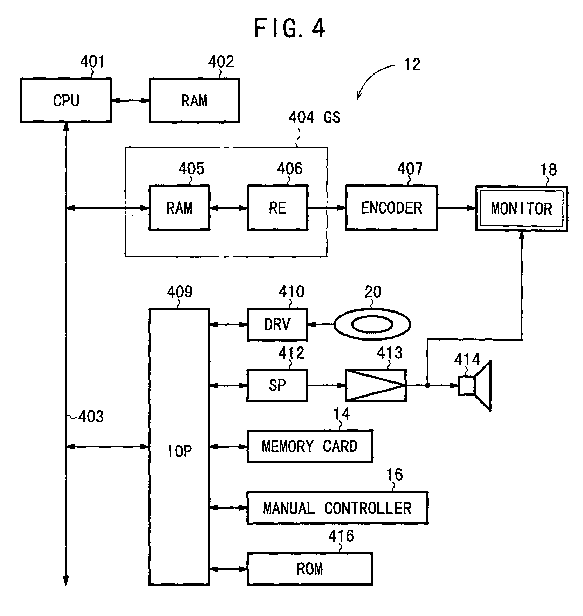

Next, an internal structure of the entertainment system 10 shown in FIG. 1 and its general operation will be described below with reference to a block diagram in FIG. 4.

As shown in FIG. 4, the entertainment apparatus 12 has a CPU 401, a RAM (semiconductor memory) 402, and a bus 403. The RAM 402 and the bus 403 are connected to the CPU 401. The RAM 402 functions as memory means for successively storing programs and data recorded in the optical disk 20. The CPU 401 functions as executing means for executing programs recorded in the optical disk 20, i.e., stored in the RAM 402.

Further, the entertainment apparatus 12 has a graphic synthesizer (GS) 404 and an input/output processor (IOP) 409. The GS 404 and the IOP 409 are connected to the CPU 401 via the bus 403. The GS 404 has a RAM 405 including a frame buffer, a z-buffer, and a texture memory, and also has a rendering engine (RE) 406 having a rendering function to draw (render and store) images in the frame buffer of the RAM 405.

The monitor 18 as an external device is connected to the GS 404 via an encoder 407 for converting digital RGB signals into standard TV signals in NTSC format, for example.

IOP 409 is connected to an optical disk drive (DRV) 410 for reading and decoding data recorded in the optical disk 20, a sound processor (SP) 412, the memory card 14 as an external memory comprising a flash memory, the manual controller 16, and a ROM 416 for storing an operating system or the like. The SP 412 supplies audio signals to the speaker 414 as an external device and/or the monitor 18 connected to the SP 412 via the amplifier 413.

The memory card 14 is an external storage device comprising a CPU or a gate array, and a flash memory. The memory card 14 is detachably connectable to the slot 30 of the entertainment apparatus 12 as shown FIG. 1. The memory card 14 is used for storing (saving) interim game data and a program such as a DVD player program (DVD driver).

The manual controller 16 supplies commands (binary, two-valued commands and multi-valued commands) inputted by a user to the entertainment apparatus 12 when the user presses the control buttons of the manual controller 16. The DRV 410 has a decoder for decoding images encoded in the standard MPEG (moving picture experts group) format.

Next, the mechanism of displaying an image on the monitor 18 according to commands from the manual controller 16 will be briefly described.

It is assumed that object data such as polygon vertex data and texture data for defining objects, and coordinate data of the defined objects in a world coordinate system WC are recorded in the optical disk 20. These data are read from the optical disk 20 by the DRV 410, stored in the RAM 402, and processed by the CPU 401.

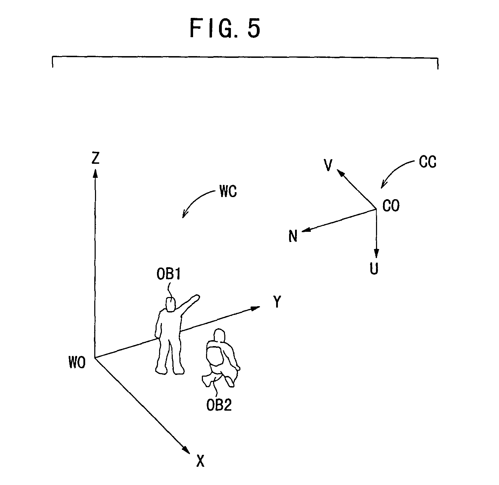

FIG. 5 schematically shows objects OB1, OB2 defined by such object data. The objects OB1, OB2 are positioned in the three-dimensional world coordinate system WC. The three orthogonal axes of the world coordinate system WC are denoted by X, Y, and z. Further, the origin of the world coordinate system is denoted by WO.

When an instruction of a user (player), i.e., an instruction for selecting (changing) a character as described later on is inputted to the entertainment apparatus 12 via the manual controller 16, the CPU 401 calculates three-dimensional positions (coordinates) of objects in a three-dimensional camera coordinate system CC. Further, the CPU 401 calculates directions of the objects toward a viewpoint (camera position), i.e., the origin of the camera coordinate system CC denoted by CO. The three orthogonal axes of the camera coordinate system CC are denoted by V, U, and N. For example, the origin CO of the camera coordinate system CC is set at the center of the screen on the monitor 18 as described later on. In this manner, the polygon vertex data of objects can be defined by coordinate data, i.e., converted into coordinate data of the orthogonal axes (X, Y, and Z axes) in the world coordinate system WC and then, converted into coordinate data of the camera coordinate system CC.

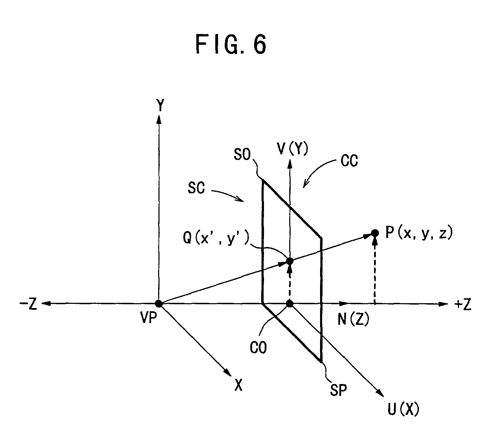

FIG. 6 schematically shows polygon vertex data P after converted into coordinate data (x, y, z) of the camera coordinate system CC. The coordinates of the polygon vertex data P (x, y, z) are converted into two-dimensional coordinate data (x', y') on the screen SP in a screen coordinate system SC by perspective transformation based on a viewpoint VP as a reference point. The origin of the screen coordinate system SC is denoted by SO and positioned on the upper left point (corner) of the screen SP.

The converted coordinate data (x', y'), z data, and texture data are supplied to the GS 404. Then, the GS 404 performs rendering based on the converted two-dimensional data (x', y'), z data to successively generate images as image data to be drawn (stored) in a memory, i.e., the RAM 405 (frame buffer). The image data for one frame generated in the rendering process is encoded by the encoder 407, supplied to the monitor 18, and displayed on the screen of the monitor 18 as a three-dimensional image or a two-dimensional image.

The entertainment system 10 according the present embodiment is basically constructed and operated as described above. Next, an example of an adventure game program operated on the entertainment system 10 will be described. The goal of the game is to solve riddles in a game story (scenario) by obtaining items and information.

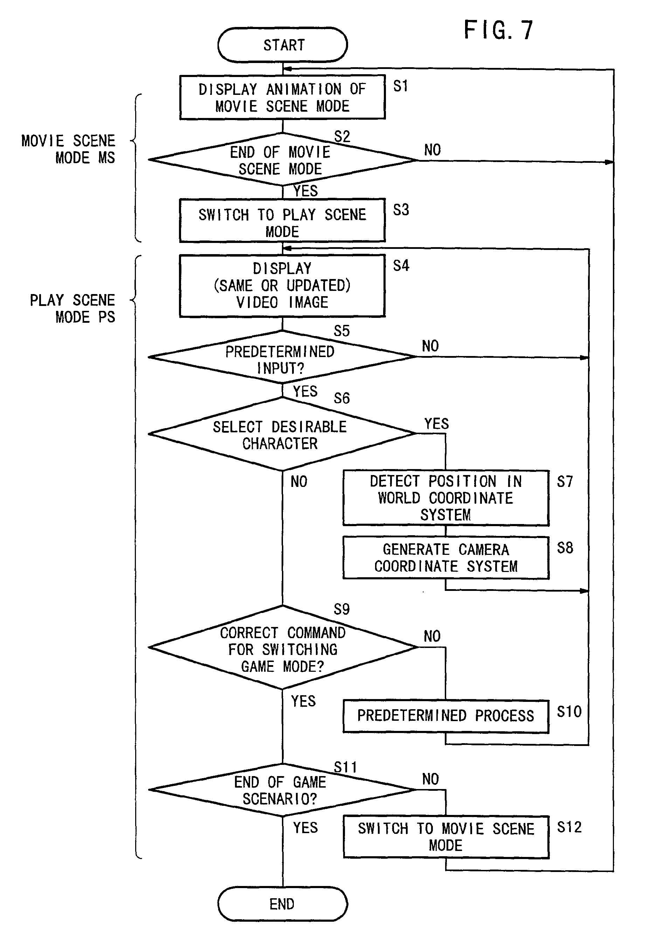

FIG. 7 shows in principle a processing sequence of a main part of the game program. The game program is supplied to the entertainment system 10 by a recording medium, i.e., the optical disk 20. The game program recorded in the optical disk 20 is read by the DRV 410 and the IOP 409 as components of the entertainment apparatus 12 and stored in the RAM 402. Then, the game program is executed by the CPU 401 for displaying video images on the screen of the monitor 18 with the aid of the GS 404 and the encoder 407, and for outputting sounds from a speaker of the monitor 18 or the external speaker 414 with the aid the amplifier 413.

Basically, the game program performs a process in a movie scene mode MS and a process in a play scene mode PS. In the movie scene mode MS, external commands inputted form the manual controller 16 are disabled. That is, the player can not input any commands (instructions) such as a character selection command as described later on. The game program is automatically executed by the CPU 401 to display predetermined animations successively on the monitor 18. In the play scene mode PS, external commands inputted from the manual controller 16 are enabled. That is, the player can input commands for selecting a character and controlling actions of the selected character to the entertainment apparatus 12 via the manual controller 16.

In the play scene mode PS, the camera coordinate system CC is generated such that the selected character can be displayed on the screen of the monitor 18. In other words, the camera position is changed such that the selected character can be viewed from the camera position. That is, in the play scene mode PS, the selected character can be controlled by the user with the manual controller 16 on the monitor 18.

In the system as described above, the player can arbitrarily select a character by manipulating the manual controller 16 regardless of whether the character is in the current screen coordinate system SC or not. The selected character is automatically positioned in the screen coordinate system SC such that the selected character can be viewed from the camera position.

Stated otherwise, in the play scene mode PS, the player can control a character selected arbitrarily from a plurality of characters at different positions in a map.

In this manner, the player can select a character as a main character of the scene in the game.

The generation of the camera coordinate system CC is to perform a camera work for setting the selected character as the main character (main subject).

The processing sequence of the game program schematically shown in FIG. 7 is a processing sequence after the scenario is started. Firstly, in step S1, a video image outputting process and a sound outputting process in the movie scene mode MS are performed. That is, in step S1, external commands inputted from the manual controller 16 for controlling a character (character object) are disabled and the game program is automatically executed by the CPU 401 to display a predetermined animation on the screen of the monitor 18 according to the game scenario.

When the animation of the movie scene mode MS is finished in step S2, control passes to step S3. In step S3, the game mode is automatically switched from the movie scene mode MS to the play scene mode PS. In the play scene mode PS, the progress of the game scenario is stopped unless a predetermined command is inputted from the manual controller 16.

In step S4, a video image of the play scene PS is displayed on the monitor 18. In the play scene mode PS, the player can input commands as external inputs with the manual controller 16 for controlling a character on the monitor 18. Further, the player can input a command for selecting a desirable character from a plurality of characters on the monitor 18.

In the play scene mode PS, as shown in step S5, if a predetermined command is not inputted from the manual controller 16, control passes back to step S4 for displaying the same video image on the monitor 18.

If a predetermined command is inputted from the manual controller 16 in step S5, whether the inputted command is a command for selecting a desirable character or not is determined in step S6.

If it is determined that the inputted command is a command for selecting a desirable character in step S6, control passes to step S7. In step S7, a current position of an object OB corresponding to the selected desirable character is detected in the world coordinate system WC. Then, in step S8, a camera coordinate system CC is generated such that the object OB corresponding to the selected desirable character can be displayed on the monitor 18.

In the video image outputting process of the play scene mode PS in step S4, the object OB is subjected to perspective transformation from the camera coordinate system CC into the screen coordinate system SC based on the viewpoint VP. Thereafter, a video image of a scene including the desirable character is displayed on the monitor 18 with the aid of the GS 404.

If a predetermined command is inputted from the manual controller 16 in step S5 and it is determined that the inputted command is not a command for selecting a desirable character in step S6, control passes to step S9. In step S9, whether the inputted command is a correct command for switching the game mode from the play scene mode PS to the movie scene mode MS or not is determined.

If it is determined that the inputted command is not a correct command for switching the game mode from the play scene mode PS to the movie scene mode MS, it is determined that the inputted command is a command for a performing predetermined action of the selected character in the play scene mode PS. Then, in step S10, a process of performing the predetermined action of the selected character is performed according to the inputted command. Thereafter, control passes back to step S4 for updating the video image in the play scene mode PS again.

If it is determined that the inputted command is a correct command for switching the game mode from the play scene mode PS to the movie scene mode MS (YES in step S9), control passes to step S11. In step S11, whether the inputted command is a command for ending the game scenario or not is determined. If the inputted command is not a command for ending the game scenario, control passes to step S12. In step S12, the game mode is switched from the play scene mode PS to the movie scene mode MS. Then, control passes back to step S1 for performing the video image outputting process in the movie scene mode MS.

In this manner, after the movie scene mode MS and the play scene mode PS are repeated a plurality of times, if it is determined that the inputted command is a command for ending the scenario in step S11, the game program is brought to an end. In this case, it is possible to reproduce an ending animation in the movie scene mode MS in ending the game program for making the game scenario highly entertaining like a cinema film.

In practice, when the game mode is switched from the movie scene mode MS to the play scene mode PS in step S3, a predetermined character designated by the program is selected as a default (initial) character. That is, the position detecting process in the world coordinate system WS in step S7 and the process of generating the camera coordinate system CC in step S8 are performed for the predetermined character in switching the movie scene mode MS to the play scene mode PS.

Next, an actual example of the game program as schematically shown in FIG. 7 will be described with reference to drawings of game scenes (screen shots) displayed on the monitor 18.

Firstly, main characters in a scenario of the actual game program, i.e., selectable characters will be described.

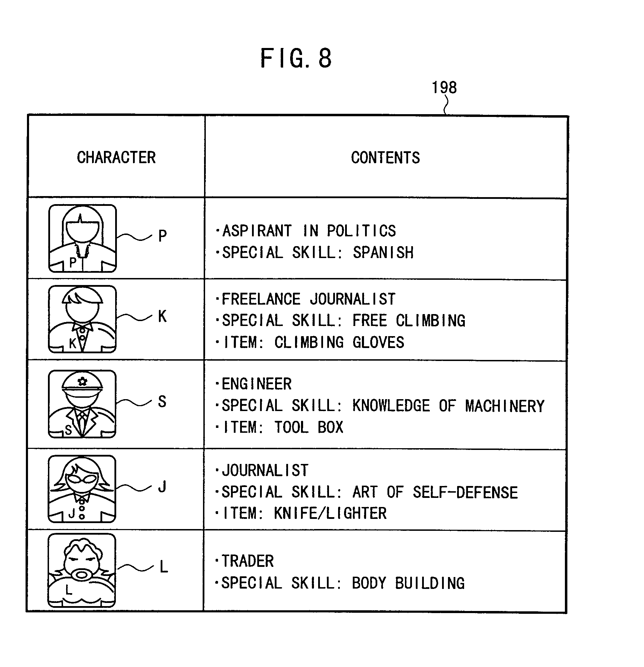

FIG. 8 is a character list 198. As shown in the character list 198, each character has at least one distinctive attribute such as a character's special item and/or a character's special skill (ability).

A first character P is a woman named Pachamama. Pachamama is a leader of a democratic movement and seeks to be elected as a politician in a fictional country Meruza (Spanish is used as an official language in Meruza). In the game, Pachamama can use Spanish as a special skill.

Basically, in the movie scene mode MS of this game, animations (movies) are reproduced in English. Further, the animations are superimposed (subtitled) in Japanese. In the overall game scene (the movie scene mode MS and/or the play scene mode PS), contents of conversations are displayed as letters (Japanese or English) on the screen of the monitor 18. That is, during the execution of the game program, five characters P, K, S, J, and L speak English. Since the character P can use Spanish, the character P can not only communicate with the characters K, S, J, and L (as described later on) in English but also with other characters in Spanish.

A second character K is a man named Kato. Kato is a freelance journalist. Kato is an experienced climber and has a special skill of free climbing. Kato uses climbing gloves as a special item and freely climbs up and down a sheer cliff.

A third character S is a man named Steeve. Steeve works for an American multi-national corporation as an engineer. Steeve uses a tool box as a special item. Steeve has high mechanical skills of using various machines as a special skill.

A fourth character J is a woman named Julia. Julia is an experienced journalist. Julia has made reports of many scenes in combat areas all over the world. Julia is skilled in the art of self-defense in combat as a special skill. Julia uses a knife for use in self-defense and a lighter as special items.

A fifth character L is a man named Lopez. Lopez is an American trader dealing in South American specialty products. Lopez is gentle, but he is a strong man of extraordinary strength.

Next, a method of manipulating the control buttons of the manual controller 16 will be described.

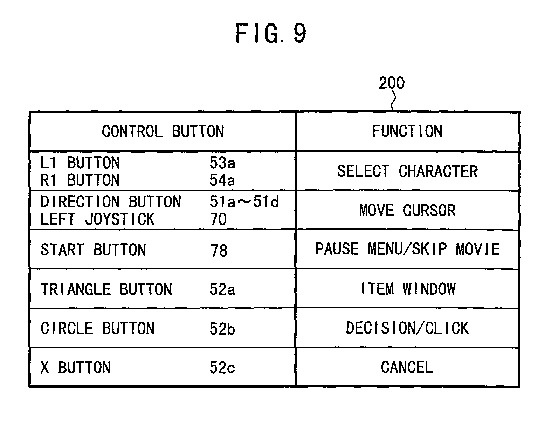

FIG. 9 is a button configuration table 200 showing default functions assigned to the respective control buttons of the manual controller 16.

As shown in the table 200, the L1 button 53a and the R1 button 54a are used for selecting (or changing) a character from the characters P, K, S, J, L. The direction buttons 51a - 51d or the left joystick 70 are used for moving a cursor. In the movie scene mode MS, the start button 78 is used for forcibly skipping an animation of the movie scene mode MS to perform the process of switching the game mode to the play mode scene PS as described in step S3. Further, in the play scene mode PS, the start button 78 is used for temporarily stopping the game to display a pause menu. In the pause menu, it is possible to enable or disable the vibration function of the manual controller 16 by pressing the left button 51c or the right button 51d.

In the play scene mode PS, the triangle button 52a is used for displaying an item window. In the item window, items possessed by the character selected from the character P, K, S, J, L are shown. At this time, it is possible to select an item by pressing the left button 51c or the right button 51d. The selected item can be used by pressing the circle button 52b. It is possible to return to the screen of the play scene mode PS by pressing the X button 52c.

The circle button 52b is used for making decision or clicking a mark or a cursor on the screen. The X button 52c is used for canceling a command, for example.

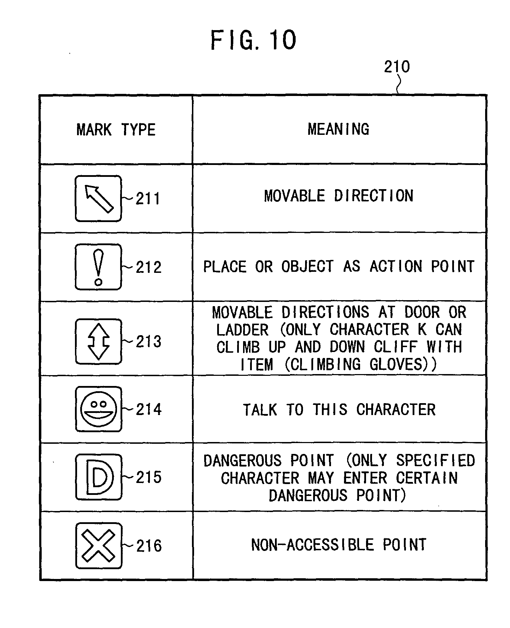

FIG. 10 is an indicator table 210 showing types and contents of indicators according to the game program. An explanation of the indicator table 210 will be given below.

A first indicator 211 is an arrow mark for indicating a movable direction of the selected character. That is, the player can move the selected character in the direction indicated by the arrow mark 211 by manipulating the direction buttons 51a - 51d or the left joystick 70.

A second indicator 212 is an exclamation mark for indicating a place or an object as an action point. That is, the player can control the selected character to take an action at the exclamation mark 212.

A third indicator 213 is a bi-directional arrow mark for indicating movable directions at a door or a ladder. When the character K is selected, the bi-directional arrow mark 213 may appear on the wall of a cliff. This indicates that the character K can climb up and down the cliff with an item (climbing gloves).

A fourth indicator 214 is a face mark for indicating a character who is ready to speak with the selected character. The player can control the selected character to speak with the character with the face mark 214 for obtaining a hint or the like.

When any one of the exclamation mark 212, the bi-directional arrow mark 213, and the face mark 214 is displayed on the screen of the monitor 18, the player can control the selected character to take an action by pressing the circle button 52b and cancel the action by pressing the X button 52c.

A fifth indicator 215 is a D mark for indicating a dangerous point or area. A certain character may enter the dangerous point. For example, the D mark may appear in a field covered with deep snow. At this time, the player may remember that the character K is an experienced climber and select the character K from the characters P, K, S, J, L. Then, the player can control the character K to slowly plow through the snowfield.

A sixth indicator 216 is an X mark for indicating a non-accessible point or area. The player can not control the selected character to enter the non-accessible point.

The brief introduction of the game has been given above. Next, an example of the game play will be described with reference to actual game screens (screen shots) and the flow chart shown in FIG. 7. The actual game is highly entertaining. However, since it is not suitable to describe the whole game scenario herein, the contents of the game scenario are modified to some extent for ease of understanding the present invention.

Firstly, a brief outline of the game scenario will be given. The character P is the leader of the active democratic movement against the tyrannical dictatorship in the small country, Meruza. The character P is travelling on an airplane. Halfway, the plane explodes and crashes into Aconcagua, one of the highest mountains of the Andes in South America. The five characters P, K, S, J, L on the airplane are miraculous survivors. The five characters P, K, S, J, L use a telecommunication facility, which is a military facility of the dictatorial government, near the crash point and call a rescue helicopter of comrades to get away alive from the mountain.

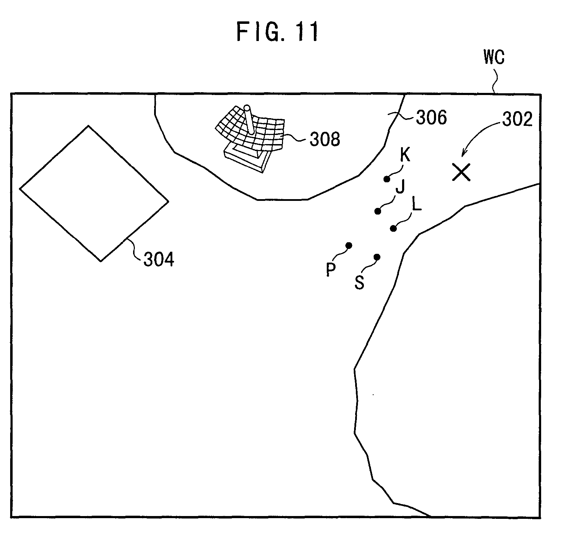

FIG. 11 two-dimensionally and schematically shows a world coordinate system WC of the game. The area of the world coordinate system WC is limited to an area movable on foot by the character P, K, S, J, L for making the game highly realistic. It is to be understood that the game can be modified to use transportation means such as a boat, an airplane, a bicycle, and a motor vehicle.

In FIG. 11, the crash point of the airplane is indicated by an X mark 302. The telecommunication facility 304 is located near the crash point 302. Further, a telecommunication antenna 308 is located on a cliff 306. The characters P, K, S, J, L are positioned at predetermined points, respectively. Position data of the respective characters P, K, S, J, L is constantly checked and included in the data of the world coordinate system WC. For example, a positional information table of the characters P, K, S, J, L is stored as a record in the RAM 402.

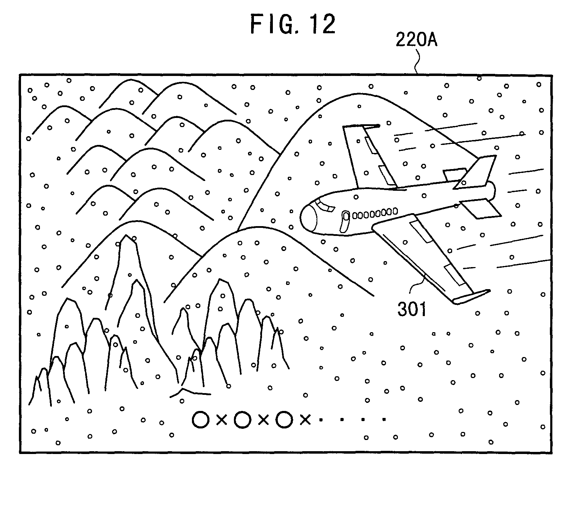

When the game is started, an animation of the movie scene mode MS showing an airplane 301 flying over snowy mountains of the Andes is reproduced as shown in a screen 220A of FIG. 12 (step S1). At this time, a message (subtitle) for describing the scene is displayed on a lower part of the screen 220A.

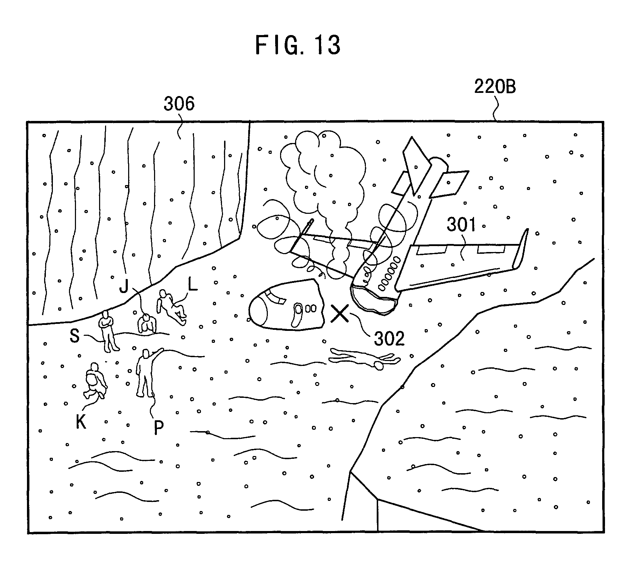

After reproducing the animation for a predetermined period of time, the airplane 301 explodes suddenly for some reasons and crashes into the mountain, i.e., Aconcagua as shown in a screen 220B of FIG. 13. The screen 220B is the last part of the animation in the screen mode MS (YES in step S2). There are only five survivors, i.e., the characters P, K, S, J, L. In the actual game, it is easy to visually identify who's who on the screen 220B from their cloths and facial expressions.

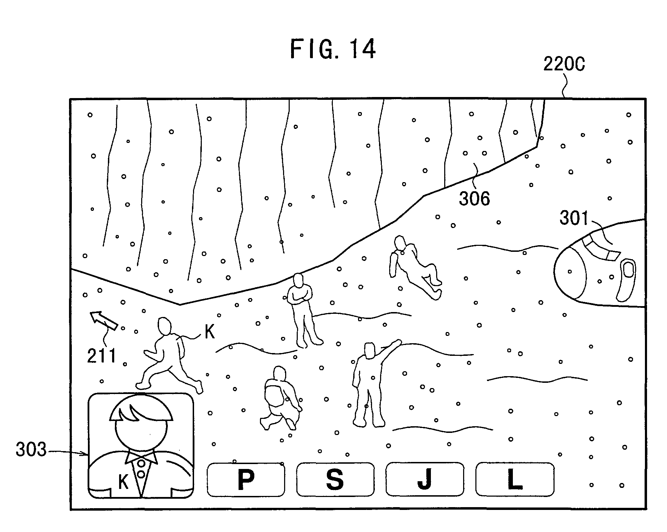

At this time, the game mode is automatically switched from the movie scene mode MS to the play scene mode PS (step S3). As shown in FIG. 14, a screen 220C of the play scene mode PS is displayed on the monitor 18 (step S4).

Icons of the selectable characters P, k, S, J, L are displayed on the bottom of the screen 220C. On the screen 220C, initials of the characters (P, K, S, J, L) are shown. In the actual game, names of the characters, (Pachamama, Kato, Steeve, Julia, Lopez) are displayed. In FIG. 14, the currently selected is the character K displayed on the left of the screen 220C. The icon of the selected character K is highlighted (enlarged) and his portrait image is displayed. The icons for selecting a character will be referred to as the character selection icons 303.

The character K is selected as a main character in the current camera coordinate system CC. On the screen 220C, the arrow mark 211 is displayed (the arrow mark 211 indicates a leftward direction by default). The player may manipulate the left joystick 70 to move the character K as a climber along the cliff 306 in the leftward direction as indicated by the arrow mark 211. The screen 220 C is updated successively according to the movement of the character K. Alternatively, the player may manipulate the left joystick 70 to move the character K in the rightward direction on the screen 220C. At this time, the arrow mark 211 indicating a rightward direction is displayed on the right side of the character K. When the character K moves in front of the burning airplane 301 on the right side of screen 220C, the arrow mark 211 changes into the X mark 216. The player cannot move the character K to the area indicated by the X mark 216. That is, the player has to move the character K in the leftward direction on the screen 220C. If the character (the climber) is not selected, i.e., if one of the other characters P, S, J, L is selected, the arrow mark 211 changes into the D mark 215 on the left side of the screen 220C since the other characters P, S, J, L, can not move in the snowfield.

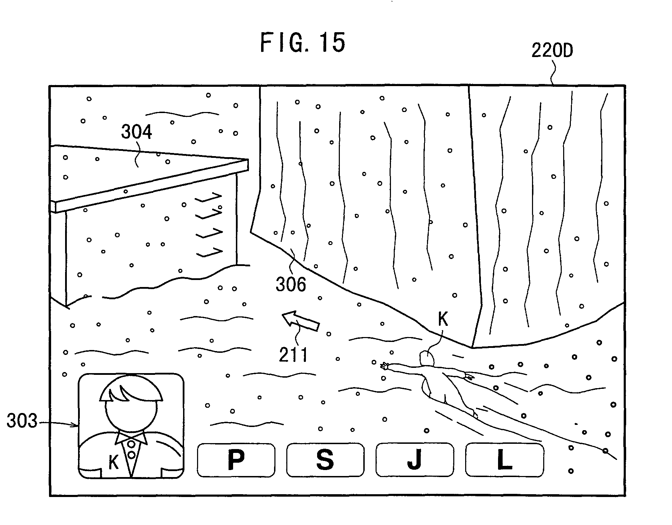

Next, as shown in a screen 220D of FIG. 15, when the player controls the character K to move in the direction of the telecommunication facility 304, the character K starts to plow through in the snowfield for making a passage (trail) from the crash point 302 to the telecommunication facility 304. After that, the other characters P, S, J, L can freely move between the crash point 302 and the telecommunication facility 304 using the passage in the snowfield.

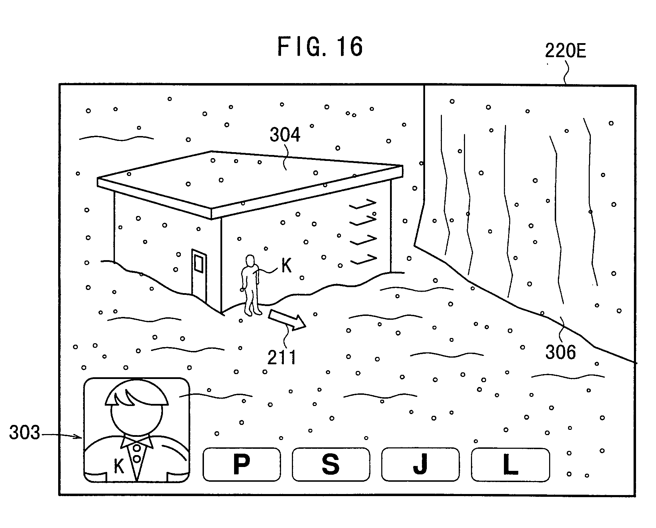

Then, as shown in a screen 220E of FIG. 16, the character K peeks in the telecommunication facility 304 from the outside and finds that there is a radio operator in the telecommunication facility 304.

The player may come up with an idea of cautiously luring the radio operator out of the door of the telecommunication facility 304 so that the radio operator can be taken away from the telecommunication facility 304.

Thus, the player selects the desirable character J skilled in the art of self-defense by selecting an character selection icon 303 with the L1 button 53a or the R1 button 54a and confirming the selection of the character J by pressing the circle button 52b. At this time, the character J is not in the current screen coordinate system SC. Therefore, the CPU 401 refers to (checks) the world coordinate system WC in the RAM 402 and detects the current position of the character J, i.e., the crash point 302 in the world coordinate system WC for switching the camera coordinate system CC, i.e., for generating a new camera coordinate system CC such that the character J is positioned in the screen coordinate system SC, i.e., the character J is displayed on the screen of the monitor 18 (YES in step S5, YES in step S6, then, steps S7, S8 and S4).

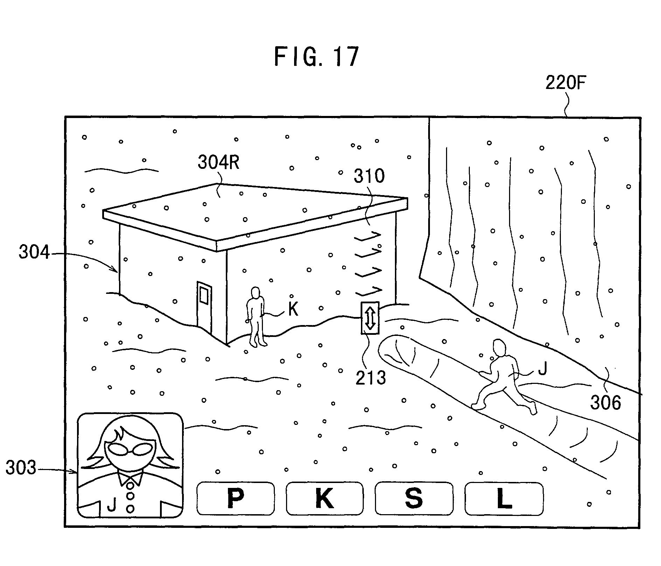

In this manner, the screen is switched to display the crash point 302. As shown in a screen 220F of FIG. 17, the player can control the character J as a main character to move to the telecommunication facility 304 using the passage in the snowfield generated by the character K. On the screen 220F, the character K (see FIG. 16) is switched to the character J.

On the screen 220F, when the character J comes to a position close to a ladder 310 for climbing up to the roof 304R of the communication facility 304, the arrow mark 211 changes into the bi-directional arrow mark 213. The bi-directional arrow mark 213 is displayed in front of the ladder 310.

At this time, the player may press the circle button 52b for inputting a command. When it is determined that the inputted command is not a command for selecting a desirable character but a correct command for switching the game mode, the game mode is switched from the play scene mode PS to the movie scene mode MS (YES in step S5, NO in step S6, YES in step S9, NO in step S11, then, steps S12 and S1).

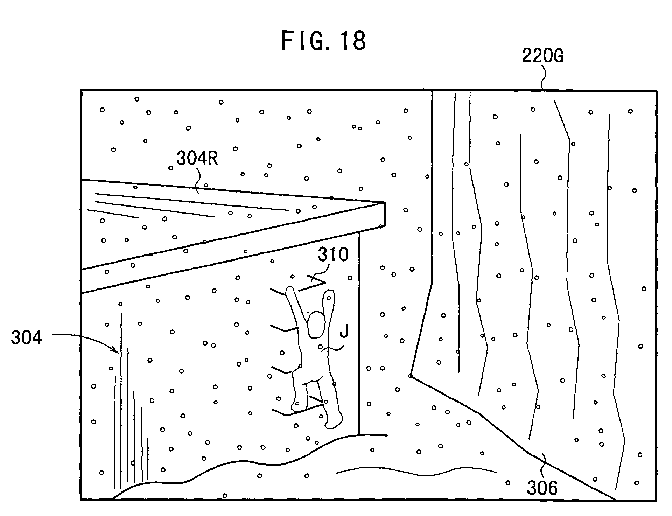

As shown in a screen 220G of FIG. 18, an animation in the movie scene mode MS is reproduced. The animation shows the character J climbing up the ladder 310 automatically.

In the movie scene mode MS, the character selection icons 303 are not displayed on the bottom of the screen 220 G.

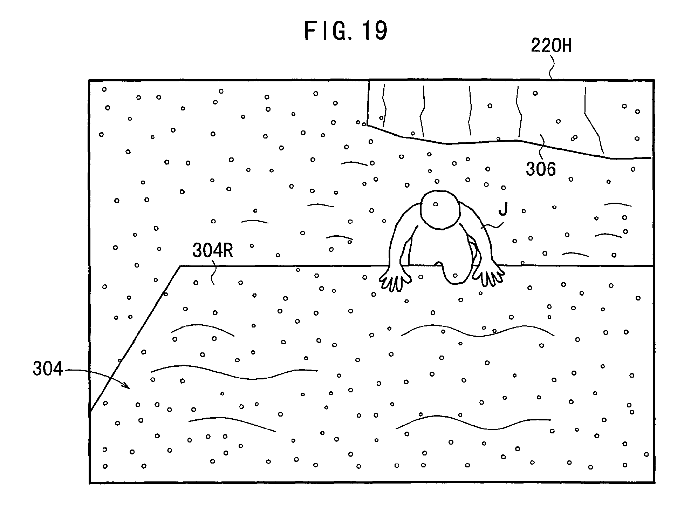

As shown in a screen 220H of FIG. 19, the animation of the movie scene mode MS continues until the character J climbs up to the roof 304R of the telecommunication facility 304.

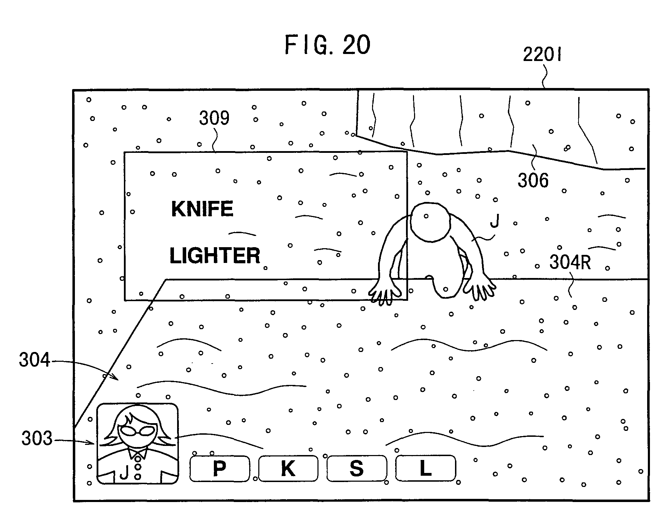

The screen 220H of the movie scene mode MS is switched to a screen 220I of the play scene mode MS in FIG. 20. At this time, if the player pushes the triangle button 52a, a semi-transparent item window 309 of the character J is displayed on the screen 220I (step S4, YES in step S5, NO in step S6, NO in step S9, then, step S10 (predetermined process for displaying the semi-transparent item window 309) and step S4). For ease of understanding the game scenario, the flow chart in FIG. 7 will not be referred to hereinbelow.

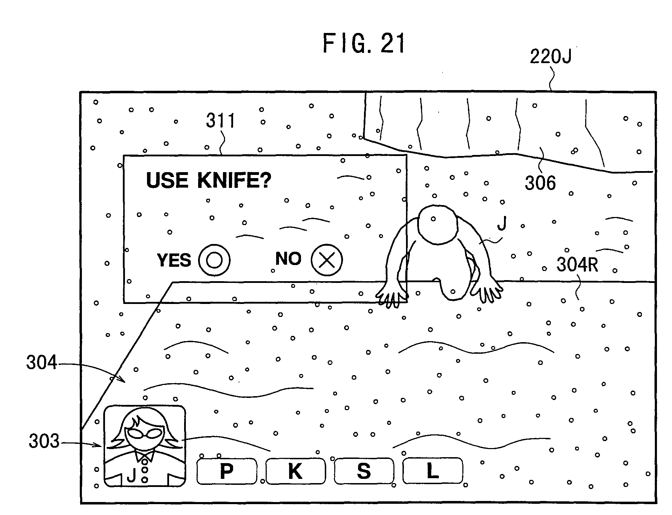

On the screen 220I of FIG. 20, the player can select the item, i.e., "Knife" or "Lighter" with the up button 51a and the down button 51b, or the left joystick 70, and confirm the item selection by pressing the circle button 52b. Then, a semi-transparent window 311 for deciding to use the selected item (YES) or to cancel to use the selected item (NO) is displayed as shown in a screen 220J of FIG. 21. In this case, it is assumed that the player decides to select and use the "knife".

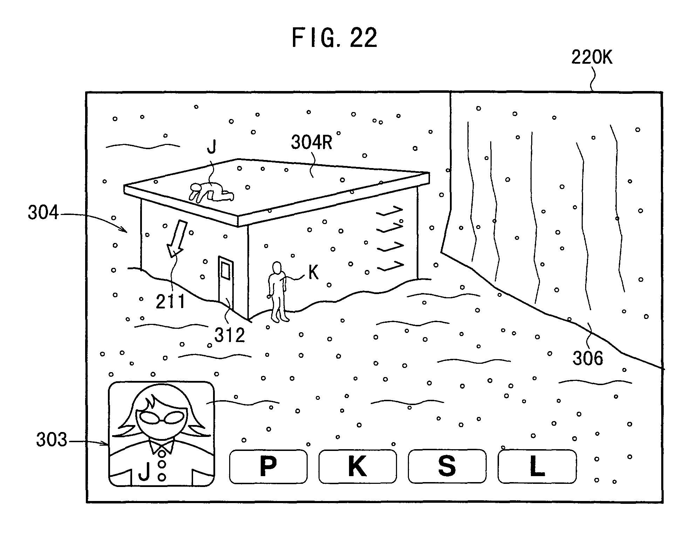

FIG. 22 shows a next screen 220K in the play scene mode PS.

As a matter of fact, the player changes the character J to the character K, controls the character K to knock the door 312 of the telecommunication facility 312 from the outside, controls the character k to move to a position unseen from the door 312 when the door 312 is opened (a position of the character K against the wall shown in FIG. 22), and switches the character K to the character J again. Then, the screen 220K is displayed. On the screen 220K, the character J is looking down at the door 312 carefully from the roof 304R.

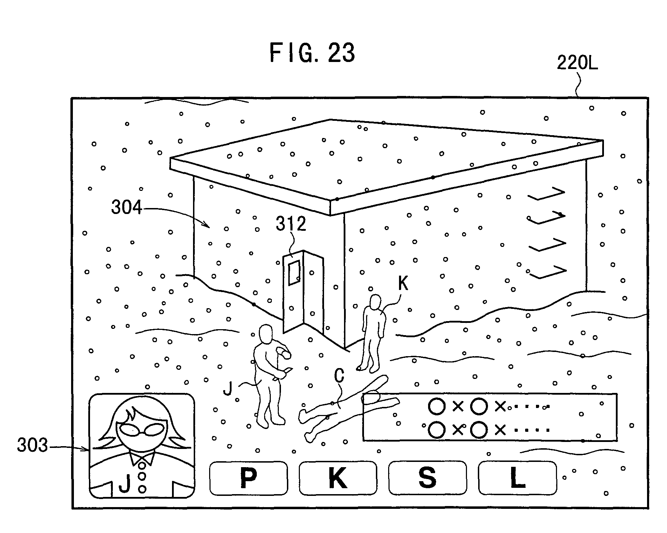

Thereafter, when the radio operator (denoted by "C") comes out of the door 312, the character J jumps down from the roof 304R and attacks the radio operator C to knock him down on the ground. Further, the character J gets a password of a telecommunication machine in the telecommunication facility 304 by threatening the radio operator C with the knife as shown in a screen 220L of FIG. 23.

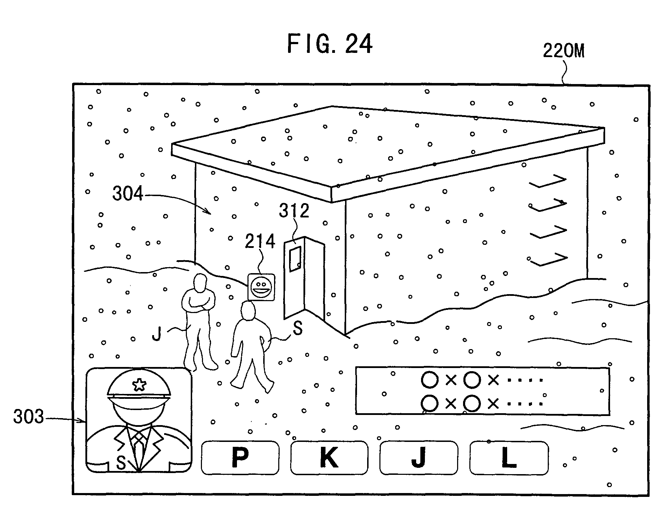

Then, the player changes the character J to the character S. Thus, the image of the crash point 302 is displayed again. The player controls the character S to move from the crash point 302 to a position close to the character J near the telecommunication facility 304 as shown in a screen 220M of FIG. 24.

When the character S moves closer to the character J, the face mark 214 is displayed on the screen 220M. At this time, the player can control the character S to get the password of the telecommunication machine from the character J by pressing the circle button 52b. On the screen 220M, the character K is not displayed. That is, since the character K is not selected, the character K has moved out of the screen 220M for allowing only the characters J and S to be displayed on the screen 220M. Such actions of the non-selected characters (e.g., the character K) can be automatically carried out by the program.

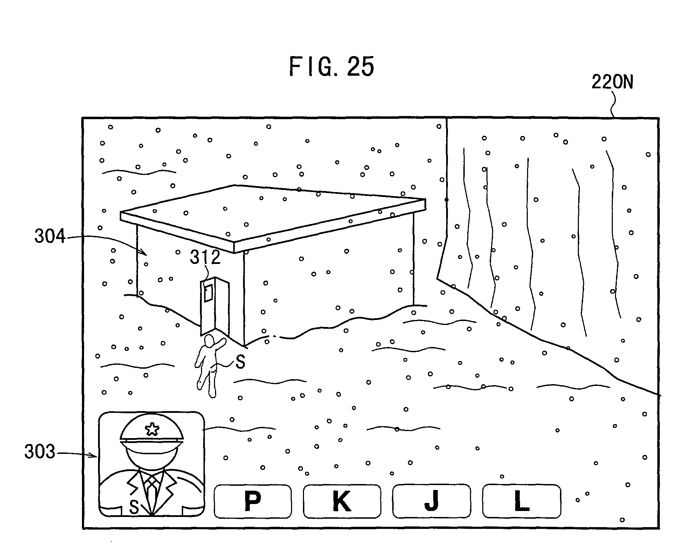

Next, as shown in a screen 220N of FIG. 25, the character S opens the door 312 and enters the telecommunication facility 304.

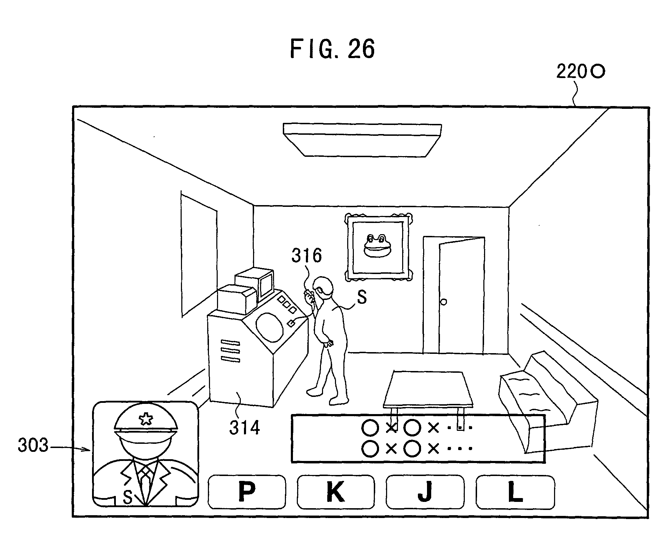

Then, as shown in a screen 2200 of FIG. 26, the character S inputs the password of the telecommunication machine 314 and tries to ask for help with a microphone 316. At this time, a message "It doesn't work. The antenna is not sensitive enough. The direction of the antenna is bad." is displayed on the screen 2200.

After the message is displayed, the player changes the character S to the character K. The character K talks to the character S to get more information. From the conversation with the character S, the character K understands that the direction of the antenna is bad and the antenna is installed at a high position.

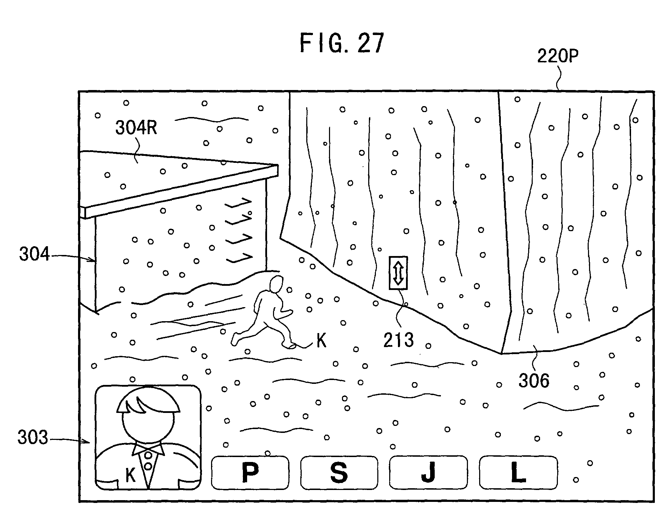

Then, the character K moves toward the cliff 306 near the telecommunication facility 304. At a predetermined position on the wall of the cliff 306, the arrow mark 211 changes into the bi-directional arrow mark 213 as shown in a screen 220P of FIG. 27.

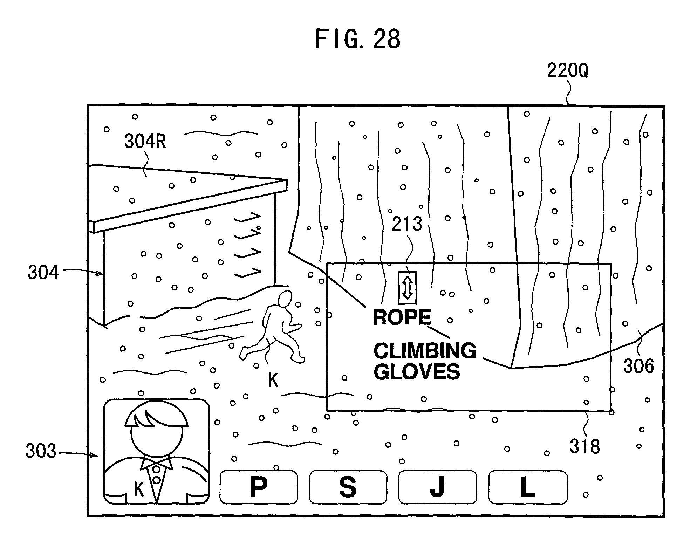

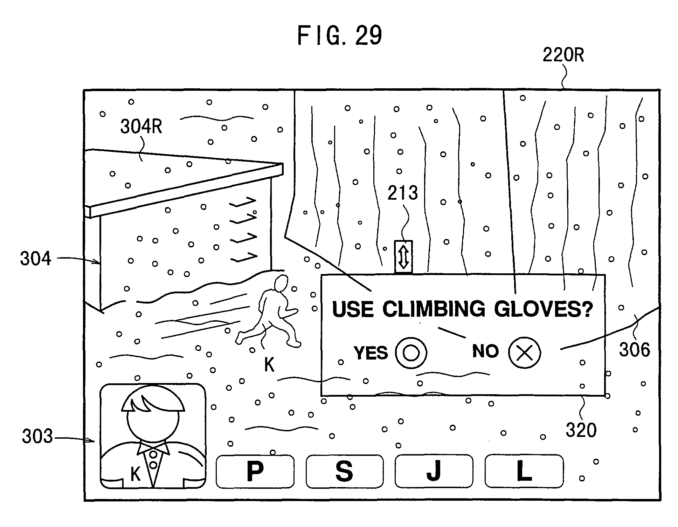

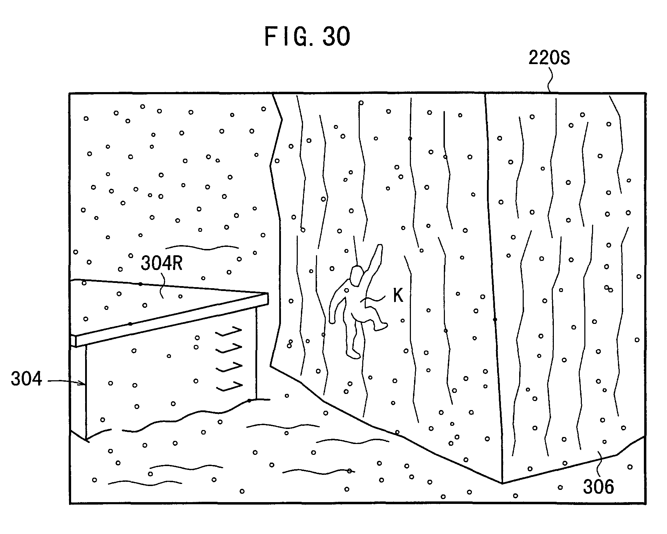

Then, the player presses the triangle button 52a to display an item window 318 as shown in a screen 220Q of FIG. 28. Then, the player presses the circle button 52b to display a decision window 320 as shown in a screen 220R of FIG. 29. By pressing the circle button 52b again, the use of the climbing gloves is confirmed. At this time, the game mode is switched from the play scene mode PS to the movie scene mode MS for automatically reproducing an animation as shown in a screen 220S of FIG. 30. The animation shows the character K climbing up the cliff 306.

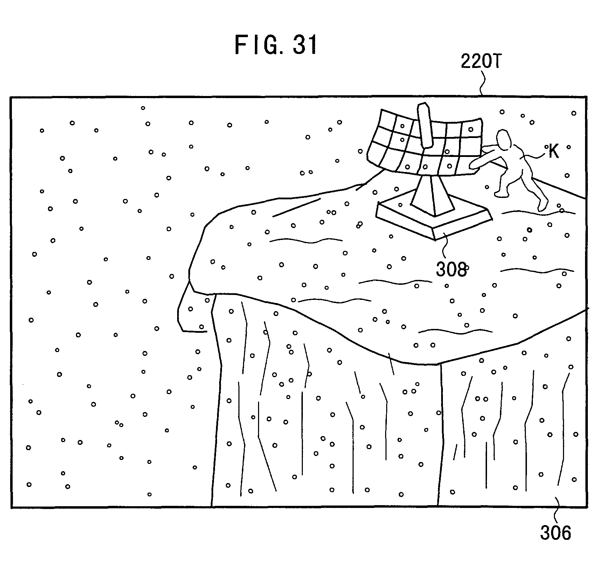

When the character K changes the direction of the telecommunication antenna 308 installed on the cliff 306 as shown in a screen 220T of FIG. 31, the game mode is switched from the movie scene mode MS to the play scene mode PS.

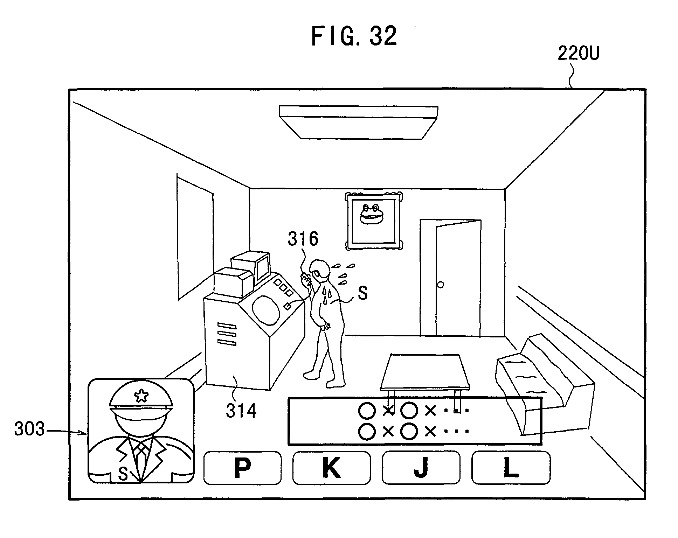

In the play scene mode PS, as shown in a screen 220U of FIG. 32, the character S is speaking with the microphone 316. There is a response from a speaker. However, the response is made in Spanish. A message "I don't understand what they are speaking. Probably, they are speaking in Spanish." is displayed on the screen 220U.

Then, from the message, the player changes the character S to the character P who can freely use Spanish.

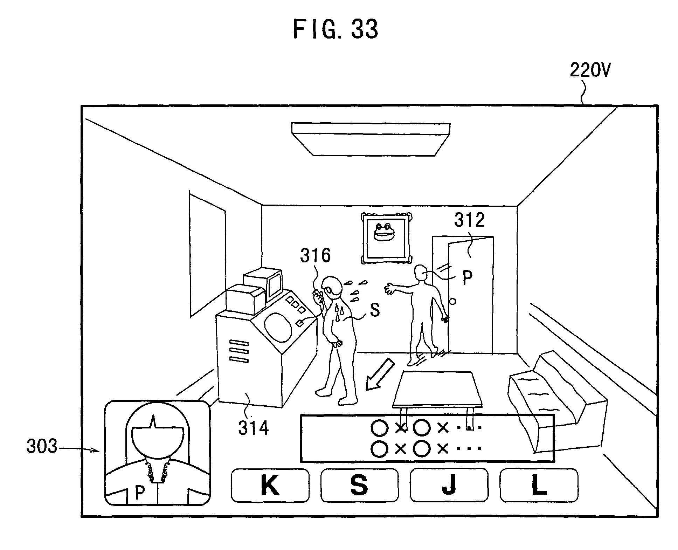

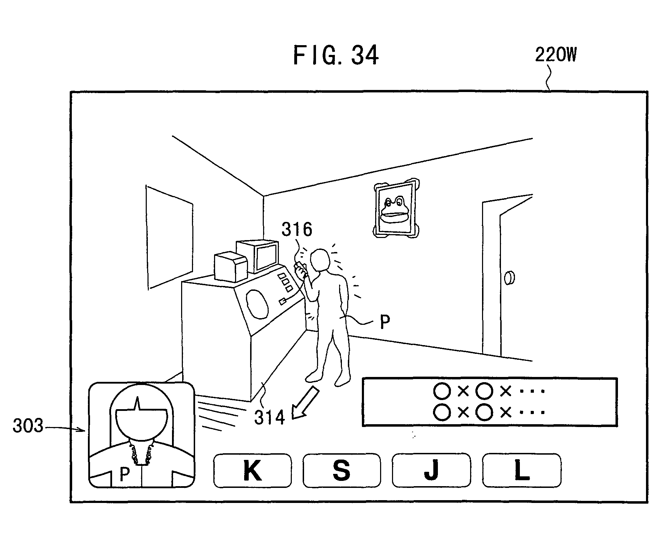

Next, the player controls the character P to move from the crash point 302 to the telecommunication facility 304. The character P opens the door 312 and enters the telecommunication facility 304 as shown in a screen 220V of FIG. 33. The character P talks to the character S. At this time, a message " It's Spanish. I can speak with them" is displayed on the screen 220V. Then, a screen 220W of FIG. 34 is displayed.

On the screen 220W, the character P asks the comrades for help. A message "Please rescue us. We are in Aconcagua. Our airplane was crashed." is displayed on the screen 220W.

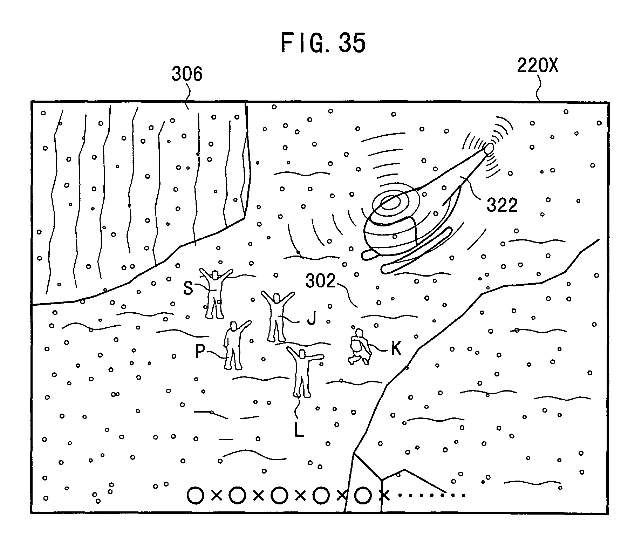

Thereafter, in the play scene mode, the player moves all the characters P, K, S, J, 1 to the crash point 302. After a while, the game mode is switched from the play scene mode PS to the movie scene mode MS as shown in a screen 220X of FIG. 35. In the ending animation, the characters P, K, S, J, L, are rescued as survivors by a helicopter 322. In this manner, the game is ended.

As described above, according to the present embodiment, the movie scene mode MS and the play scene mode PS are repeated alternately. In the play scene mode PS, the player can advance the game scenario by controlling the manual controller 16. Specifically, the player can arbitrarily select a character from the characters P, K, S, J, L and control the selected character as a main character in the scene for solving riddles or problems. In the movie scene mode MS, the player can enjoy viewing an animation like a cinema film. Since the user can interactively play the game in the play scene mode PS, a highly entertaining video game can be obtained.

That is, according to the present embodiment, when an input command for selecting a desirable character from the plurality of characters P, K, S, J, L is detected in the play scene mode PS, a new camera coordinate system CC can be generated such that the desirable character can be displayed on the screen. Accordingly, it is possible to create a highly entertaining game.

When the input command for selecting a desirable character is detected, the desirable character may not be positioned in the current world coordinate system. In this case, the position of the desirable character in the world coordinate system WC is detected for generating the camera coordinate system. Accordingly, it is possible to always display the desirable character on the screen of the monitor 18.

In selecting a desirable character, as shown in FIG. 14, for example, the selectable characters P, K, S, J, L are displayed as the character selection icons 303 on the lower part of the screen of the monitor 18. Accordingly, it is possible to select a desirable character by manipulating the left button 51c, the right button 51d, and the circle button 52b from the characters P, K, S, J, L.

The currently selected character can be displayed as a still image at a certain position on the screen. According to the game program of the present embodiment, in the play scene mode PS, as long as the controller 16 is not manipulated, basically, a three-dimensional still image is displayed on the screen. However, some effects for expressing movement of objects such as a flame, white exhaled air of the characters P, K, S, J, L are made by texture mapping.

As described in connection with the present embodiment, the area of the world coordinate system WC may be limited to an area movable on foot by the character P, K, S, J, L. Accordingly, it is possible to make the survival from the snowy mountain more realistic so that the game can be highly entertaining.

Since the respective characters P, K, S, J, K have their own distinctive attributes (special items, special skills or abilities), the respective characters P, K, S, J, K need to be controlled to perform suitable actions according to their attributes. Accordingly, the player can be highly motivated to grappling with the hard task of solving problems.

The characters P, K, S, J, L may obtain special items during the game. In the actual game program as described above, the character K obtains the climbing gloves and the character S obtains the tool box during the game. Alternatively, the characters P, K, S, J, L may have special items from the beginning of the game. In the actual game program as described above, the character J has the knife and the lighter from the beginning of the game. The characters P, K, S, J, L may have special skills or abilities. For example, the character P has the skill of using Spanish, and the character P has the skill of self-defense.

When a correct action of the selected character is performed, i.e., when a correct command predetermined according to the game program is inputted, the game mode is switched from the play modes scene PS to the movie scene mode MS. Accordingly, the player can get a feeling of accomplishment by completing the task of solving a problem.

Further, according to the present embodiment, the player can enjoy viewing animations in the movie scene MS and enjoy playing an interactive game in the play scene mode PS. Accordingly, it is possible to obtain a highly entertaining video game.

As described above, according to the present invention, a command for selecting a desirable character from a plurality of predetermined characters in a game is inputted during execution of a game program. A new camera coordinate system is generated such that the desirable character is displayed on the monitor. Accordingly, it is possible to create a highly entertaining new game.

Further, according to the program the present invention, a movie scene mode for automatically advancing a game scenario and a play scene mode for allowing a user to manipulate a manual controller to input a suitable command for advancing the game scenario are performed alternately. Accordingly, it is possible for the player to enjoy both animations of the movie scene mode and an interactive game of the play scene mode.

Further, according to the present invention, it is possible to create a highly entertaining game for allowing the player to solve riddles or problems by changing a character.

The present invention shall not be limited to the embodiment disclosed herein. It will be apparent to a person skilled in the art that various modifications may be made without departing from the scope of the present invention.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A recording medium for storing a program comprising the steps of:
detecting a command for selecting a desirable character from a plurality of characters (P, K, S, J, L) (S6); and
generating a camera coordinate system (CC) such that said desirable character selected by said command is positioned in a screen coordinate system (SC) (S8).

2. A recording medium according to claim 1, wherein said step of generating a camera coordinate system (CC) (S8) comprises the step of:
generating a camera coordinate system (CC) based on a position of said desirable character selected by said command in a world coordinate system (WC), if it is determined that said desirable character is not positioned in a current screen coordinate system (SC).

3. A recording medium according to claim 1, wherein said program further comprises the step of:
displaying said plurality of characters (P, K, S, J, L) on a screen so that a player can input said command for selecting a desirable character (S4).

4. A recording medium according to claim 1, wherein each of said characters has at least one distinctive attribute.

5. A recording medium according to claim 4, wherein said at least one attribute comprises a character's item and/or a character's skill.

6. A recording medium for storing a program executed by a computer for performing a process in a movie scene mode (MS) and a process in a play scene mode (PS) alternately,
external commands for controlling a character being disabled in said movie scene mode (MS) and enabled in said play scene mode (PS) so that the character control can be performed automatically by executing said program in said movie scene mode (MS) and the character control can be performed based on said external commands in said play scene mode (PS),
wherein said process in said play scene mode (PS) comprises the steps of:
detecting a command for selecting a desirable character from a plurality of characters (P, K, S, J, L) (S6); and
generating a camera coordinate system (CC) such that said desirable character selected by said command is positioned in a screen coordinate system (SC) (S8).

7. A recording medium according to claim 6, wherein said step of generating a camera coordinate system (CC) (S8) comprises the step of:
generating a camera coordinate system (CC) based on a position of said desirable character selected by said command in a world coordinate system (WC), if it is determined that said desirable character is not positioned in a current screen coordinate system (SC).

8. A recording medium according to claim 6, said process in said play scene mode (PS) further comprises the steps of:
displaying said plurality of characters (P, K, S, J, L) on a screen so that a player can input said command for selecting a desirable character (S4).

9. A recording medium according to claim 6, wherein each of said characters has at least one distinctive attribute.

10. A recording medium according to claim 9, wherein said at least one attribute comprises a character's item and/or a character's skill.

11. A recording medium according to claim 6, wherein said process in said play scene mode (PS) comprises the steps of:
switching the game mode from said play scene mode (PS) to said movie scene mode (MS), if a command indicating a correct action of said selected character predetermined by said program is inputted (S9, S10).

12. A program comprising the steps of:
detecting a command for selecting a desirable character from a plurality of characters (P, K, S, J, L) (S6); and
generating a camera coordinate system (CC) such that said desirable character selected by said command is positioned in a screen coordinate system (SC) (S8).

13. A program according to claim 12, wherein said step of generating a camera coordinate system (CC) (S8) comprises the step of:
generating a camera coordinate system (CC) based on a position of said desirable character selected by said command in a world coordinate system (WC), if it is determined that said desirable character is not positioned in a current screen coordinate system (SC).

14. A program executed by a computer for performing a process in a movie scene mode (MS) and a process in a play scene mode (PS) alternately,
external commands for controlling a character being disabled in said movie scene mode (MS) and enabled in said play scene mode (PS) so that the character control can be performed automatically by executing said program in said movie scene mode (MS) and the character control can be performed based on said external commands in said play scene mode (PS),
wherein said process in said play scene mode (PS) comprises the steps of:
detecting a command for selecting a desirable character from a plurality of characters (P, K, S, J, L) (S6); and
generating a camera coordinate system (CC) such that said desirable character selected by said command is positioned in a screen coordinate system (SC) (S8).

15. A program according to claim 14, wherein said step of generating a camera coordinate system (CC) (S8) comprises the step of:
generating a camera coordinate system (CC) based on a position of said desirable character selected by said command in a world coordinate system (WC), if it is determined that said desirable character is not positioned in a current screen coordinate system (SC).

16. A program according to claim 14, wherein said process in said play scene mode (PS) comprises the steps of:
switching the game mode from said play scene mode (PS) to said movie scene mode (MS), if a command indicating a correct action of said selected character predetermined by said program is inputted (S9, S10).

17. An entertainment system comprising:
an entertainment apparatus (12) comprising a memory (402) for storing a program and a processing unit (401) for executing said program;
a manual controller for inputting a control request of a player to said entertainment apparatus (12); and
a monitor (18) for displaying an image outputted from said entertainment apparatus (12),
wherein said program comprises the steps of:
detecting a command for selecting a desirable character from a plurality of characters (P, K, S, J, L) (S6); and
generating a camera coordinate system (CC) such that said desirable character selected by said command is positioned on said monitor (18).

18. An entertainment system according to claim 17, wherein, in said step of generating a camera coordinate system (CC) (S8), said processing unit (401) for executing said program generates a camera coordinate system (CC) based on a position of said desirable character selected by said command in a world coordinate system (WC), if it is determined that said desirable character is not positioned in a current screen coordinate system (SC).

19. An entertainment apparatus connectable to a manual controller for inputting a control request of a player to said entertainment apparatus and connectable to a monitor (18) for displaying an image outputted from said entertainment apparatus,
wherein said entertainment apparatus comprises a memory (402) for storing a program and a processing unit (401) for executing said program, said program comprising the steps of:
detecting a command for selecting a desirable character from a plurality of characters (P, K, S, J, L) (S6); and
generating a camera coordinate system (CC) such that said desirable character selected by said command is displayed on said monitor (18).

20. An entertainment apparatus according to claim 19, wherein, in said step of generating a camera coordinate system (CC) (S8), said processing unit (401) for executing said program generates a camera coordinate system (CC) based on a position of said desirable character selected by said command in a world coordinate system (WC), if it is determined that said desirable character is not positioned in a current screen coordinate system (SC).
